# EUROPEAN PATENT APPLICATION

(11) **EP 2 151 995 A2**
(43) Date of publication of application: **10.02.2010**
(21) Application number: 09251940.4
(22) Date of filing: 05.08.2009
(51) Int. Cl.: H04N 5/445

(54) **Transparent data collection from a network for electronic program guide-like applications**

(30) Priority: 08.08.2008 US 189009
(71) Applicant: Sony Corporation, Tokyo (JP); Sony Electronics, Inc., Park Ridge, NJ 07656 (US)
(72) Inventor: Murugesan, Sivakumar, San Diego, CA 92129 (US)
(74) Representative: Scaddan, Gareth Casey

(57) **Abstract**

A method and apparatus for transparent data collection from a network for electronic program guide-like applications is provided. The method includes the detection of a file system command issued by an application program. Once detected, if the detected command requests broadcast object carousel data, the method collects the requested broadcast object carousel data from a network. Once collected, the broadcast object carousel data may be provided to the application program to provide transparent collection of broadcast object carousel data. To provide transparent collection of broadcast object carousel data, in one embodiment a client driver is installed under an operating system within an input/output (I/O) system layer. The client driver may be mounted in a mount point to register standard file system operation function calls for collecting broadcast object carousel program guide data. Other embodiments are described and claimed.

## Description

### Field Of The Invention

The invention relates generally to the field of digital television systems. More particularly, one or more of the embodiments relate to an apparatus and method for transparent data collection from a network for electronic program guide-like applications.

### Background Of The Invention

The majority of US households receive television content through a service provider, such as terrestrial broadcast, cable, and direct broadcast satellite (DBS) companies. Such systems traditionally use a few OEM suppliers of hardware (e.g., set top boxes) and do not provide for integration of functionality of set-top boxes directly into digital TV sets. Direct broadcast satellite or DBS companies can broadcast multimedia, platform-specific applications, possibly together with digital television programs. A suitably-equipped multimedia platform-specific set-top box can receive these applications and run them locally. Example applications are: electronic program guides, play-along games, telebanking, teleshopping, electronic newspapers and similar information services. Typically, multimedia platform-specific applications are broadcast in an object carousel, where all the application code and data is broadcast in cycles.

A suitable transmission system for such application delivery is known from ISO/IEC International Standard 13818-6, "MPEG-2 digital storage media command and control," July 12, 1996 (identified herein as DSM-CC). In modem digital broadcast systems, a transmitter typically transmits a large number of services (or channels) to a plurality of receivers, examples of which are found in television sets or set-top boxes. An MPEG-2 transport stream is a multiplex of a number of services, and a transmitter would typically transmit several transport streams to a set-top box. In turn, a suitably-configured set-top box can tune to a specific transport stream and is then able to retrieve information from that transport stream.

As indicated above, interactive multimedia applications are typically broadcast in a carousel-like fashion with successive data sections being repeated periodically and sequentially in the transport stream. For instance, digital video broadcast or DVB has specified DSM-CC object carousels as mentioned above for broadcasting interactive applications. Similarly, an electronic program guide (EPG) is a TV/set-top box (STB) application that may include data collection; parsing and storing guide data; and displaying the program guide. Conventionally, all of the three above software modules are proprietary and there is no standard interface between any of these modules.

Unfortunately, consumer electronics (CE) manufacturers' efforts to create an alternative user interface to that supplied via a proprietary EPG application remain stymied because there is no way to gain access to the broadcast object carousel program guide data. It is currently not possible to manage content in new ways that the customer might find compelling.

### Summary Of The Invention

Various respective aspects and features of the invention are defined in the appended claims. Combinations of features from the dependent claims may be combined with features of the independent claims as appropriate and not merely as explicitly set out in the claims.

One embodiment provides a method and apparatus for transparent data collection from a network for electronic program guide-like applications. The method includes the detection of a file system command issued by an application program. Once detected, if the detected command requests broadcast object carousel data, the method collects the requested broadcast object carousel data from a network. Once collected, the broadcast object carousel data may be provided to the application program to provide transparent collection of broadcast object carousel data.

To provide transparent collection of broadcast object carousel data, in one embodiment a client driver is installed under an operating system within an input/output (I/O) system layer. The client driver may be mounted in a mount point to register standard file system operation function calls. In response to a file system operation call for broadcast object carousel program guide data, a guide data collection module may be activated to collect broadcast object carousel program guide data that is loaded within a set-top box or digital television for local access by an electronic program guide or EPG application. Other embodiments are described and claimed.

### Brief Description Of The Drawings

Embodiments of the invention will now be described with reference to the accompanying drawings, throughout which like parts are referred to by like references, and in which:
**FIG. 1** is a block diagram of a content delivery system including a digital device having a client driver to provide transparent collection of broadcast object carousel data according to one embodiment.
**FIG. 2** is a block diagram illustrating a set-top box that further illustrates the client driver and digital content delivery system of **FIG. 1** according to one embodiment.
**FIG. 3** is a block diagram further illustrating the digital receiver of **FIG 1****.** including a client driver to provide the transparent broadcast object carousel data collection according to one embodiment.
**FIG. 4** is a block diagram that provides an overview of a client driver that may be used to replace a proprietary electronic program guide application according to one embodiment.
**FIG. 5** is a flow chart illustrating a method for transparent broadcast object data carousel data collection according to one embodiment.
**FIG. 6** is a flow chart illustrating a method for installing a client driver to provide transparent broadcast object carousel data collection according to one embodiment.
**FIG. 7** is a flow chart illustrating a method for updating a metadata tree in a set-top box according to one embodiment.
**FIG. 8** is a flow chart illustrating a method for transparently collecting broadcast object carousel data according to one embodiment.
**FIG. 9** is a flow chart illustrating a method for servicing an API call that requests broadcast object carousel program guide data according to one embodiment.
**FIG. 10** is a flow chart illustrating a method for collecting requested broadcast object carousel program guide data from a network according to one embodiment.
**FIG. 11** is a flow chart illustrating a content delivery system to provide transparent broadcast object carousel data collection according to one embodiment.

### Description of the Example Embodiments

Embodiments of the present invention relate to an apparatus and method for transparent data collection from a network for electronic program guide-like applications. In one embodiment, the method may include the detection of a file system command issued by an application program. In one embodiment, the application program is an electronic program guide (EPG) application program. In one embodiment, an EPG application program may be provided by a third party that is different from an original equipment manufacturer of a set-top box/digital television, or a service provider of broadcast digital content. As described herein, a "service provider" may refer to a company that broadcasts digital content to a plurality of digital televisions that may or may not include set-top boxes.

A conventional EPG is generally a TV/set-top box (STB) application that provides guide data collection; parsing and storing the data; and displaying the program guide. Conventionally, each of the above three software modules is proprietary and there is no standard interface between any of the above modules. In one embodiment, a generic/transparent guide data collection is described to decouple any other modules (parsing and display) so that modules from any other vendor can use a non-proprietary data collection module through standard file system interface calls.

In one embodiment, a guide data collection module may be installed as a client driver as part of an input/output (I/O) file system layer. In one embodiment, the client driver responds to file system commands issued by a program guide display module from a different vendor. The client driver may be referenced within a driver table of an I/O system layer to convert file system commands into corresponding commands issued to a guide data collection module. In one embodiment, if a detected file system command requests broadcast object carousel data, the requested broadcast object carousel data may be collected from a network. In one embodiment, this network may be provided by a cable operator, a digital video broadcast operator (DVB), or the like.

Once collected, the requested broadcast object carousel data can be provided to an application program to provide transparent collection of broadcast object carousel data. As described herein, "transparent collection" may refer to the ability to access data by a program guide display module as if such data were loaded (local) within a set-top box or digital television system. However, such data is not available within the set-top box or digital television system but is in fact repeatedly transmitted as part of the broadcast object carousel from a network.

In the embodiments described, a client driver may include a control task module and a data task module. In one embodiment, the control task module is responsible for updating a metadata tree that describes control information regarding the files that are broadcast from the broadcast object carousel. In response to a specific request for a file by an application program, a data task portion (guide data collection module) of the client driver will service the specific request. In one embodiment, a request is serviced by caching data from the broadcast object carousel and loading a buffer with such data to provide generic collection of file data for an application.

EPG program data may consist of one of various different types of files, including, but not limited to, ChannelList, Schedule, and Program files. Each file may contain data for "N" number of days. N may vary from one to any number of days. Multiple schedule or program files may be present in the same carousel with each file containing data for "N" days. The application will determine how many days of data go into a given schedule or program file. As described herein, the term "Metadata" may include but is not limited to all file attributes for the above types of files. The client driver's control task continues to update the metadata so that the application can access up-to-date file attributes of the files in the carousel through standard operating system interface commands, such as "ls" and "dir" commands in Linux. Based on the file attributes, an application may decide whether or not to collect data files (ChannelList, Schedule, or Program files).

As described herein, a "control device" may include but is not limited to television sets and other devices using or incorporating television receivers including digital television sets, set-top boxes, set back boxes, digital video recorders, Blu-ray recorders, optical disc recorders, disc drive recorders and other devices without limitation. As further described herein, the term "access device" is intended to mean a device such as a television set-top box or other terminal that has direct access to the service provider's metadata through digital data communication, whereas the term "receiver device" is generally intended to represent the device that receives video content from the access device, but is unable to directly access the digital representation of the metadata. The receiver device, by virtue of becoming the master to the access device in accord with embodiments consistent with the present invention is also referred to as a control device.

In the following description, certain terminology is used to describe features of the invention. For example, the term "logic" is representative of hardware and/or software configured to perform one or more functions. For instance, examples of "hardware" include, but are not limited or restricted to an integrated circuit, a finite state machine or even combinatorial logic. The integrated circuit may take the form of a processor such as a microprocessor, application specific integrated circuit, a digital signal processor, a micro-controller, or the like.

An example of "software" includes executable code in the form of an application, an applet, a routine or even a series of instructions. The software may be stored in any type of computer or machine readable medium such as a programmable electronic circuit, a semiconductor memory device inclusive of volatile memory (*e*.*g*., random access memory, etc.) and/or non-volatile memory (*e*.*g*., any type of read-only memory "ROM", flash memory), a floppy diskette, an optical disk (*e*.*g*., compact disk or digital video disc "DVD"), a hard drive disk, tape, or the like.

A further example of software includes a "software module." A "software module" or "module" is a series of code instructions that, when executed, performs a certain function. Examples of such code include an operating system, an application, an applet, a program or even a subroutine. Software module(s) may be stored in a machine-readable medium, including, but not limited to, an electronic circuit, a semiconductor memory device, a read only memory (ROM), a flash memory, an erasable ROM (EROM), a floppy diskette, a computer disk, an optical disk, a hard disk, a fiber optic medium, a radio frequency (RF) link and the like.

The term "program" or "computer program" or similar terms, as used herein, is defined as a sequence of instructions designed for execution on a computer system. A "program", or "computer program", may include a subroutine, a function, a procedure, an object method, an object implementation, in an executable application, an applet, a servlet, a source code, an object code, a shared library / dynamic load library and/or other sequence of instructions designed for execution on a computer system.

The term "program", as used herein, may also be used in a second context (the above definition being for the first context). In the second context, the term is used in the sense of a "television program". In this context, the term is used to mean any coherent sequence of audio video content such as those which would be interpreted as and reported in an electronic program guide (EPG) as a single television program, without regard for whether the content is a movie, sporting event, segment of a multipart series, news broadcast, etc. The term may also be interpreted to encompass commercial spots and other program-like content which may not be reported as a program in an electronic program guide.

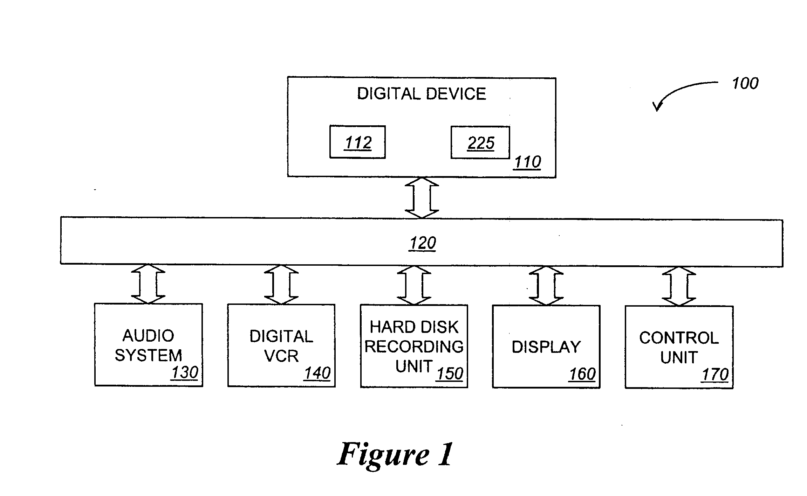

One of the primary constraints to providing a CE Company with the ability to provide their own EPG application is the potential inability to access the broadcast object carousel data associated with digital television programming. Referring to **FIG. 1****,** one embodiment of a content delivery system 100 is shown that provides transparent collection of broadcast object carousel data according to one embodiment. Content delivery system 100 includes a digital device 110 that receives information including program data from one or more service providers. The program data may be propagated as a digital bit stream for example. Digital device 110 may operate as any number of products such as a set-top box or one or more components integrated into a television, computer, audio-playback device (e.g., digital radio), audio-recording device (e.g., MP3 player), video-recording device (e.g., digital recorder), or the like.

For instance, digital device 110 may be configured in accordance with an embedded architecture, a split security architecture, or other like architecture. As an embedded architecture, in one embodiment, digital device 110 is implemented as a set-top box that comprises fixed, internal circuitry supporting both entitlement management and descrambling operations. Alternatively, in accordance with a split security architecture embodiment, digital device 110 may be adapted to receive a removable smart card that handles entitlement management, while descrambling of digital content is controlled by internal circuitry.

Digital device 110 comprises a receiver 112, which processes the incoming information, extracts the program data inclusive of the digital content therefrom, and provides the digital content in a perceivable format (e.g., viewable and/or audible). The "program data" comprises any or all of the following: system information, entitlement control message(s), entitlement management message(s), or digital content. The "digital content" in the program data stream may include an image, audio, video or any combination thereof. The content may be in a scrambled or clear format.

As described herein, the term "scrambled", when used to modify the terms "key", "content", "format" or "form" is inclusive of content or describes a format wherein encryption using any known encryption algorithm including, but not limited, the data encryption standard (DES), triple DES (3DES), advanced encryption standard (AES) Rivest, Shamir and Adelman (RSA) encryption or other like encryption standard, as well as scrambling algorithms, including conditional access (CA) common scrambling algorithm (CSA) (CA CSA) or other like scrambling algorithm. Likewise, the terms "scrambling" or "scrambled" refer to data or information that is encrypted or scrambled using any known conventional encryption or scrambling algorithms, as described above. The terms "descrambled" or "descrambling", when modifying the terms "key", "content" "format" or "form" refers to data or content in a format that is either decrypted or descrambled, such that the data or content is unobscured and available for playback in the clear format.

Herein, "system information" may include information on program names, time of broadcast, source, and a method of retrieval and decoding, as well as copy management commands that provide digital receivers and other devices with information that will control how and when the digital content may be replayed, retransmitted and/or recorded. These copy management commands may also be transmitted along with an entitlement control message (ECM), which is generally used to regulate access to a particular channel or service. An "Entitlement Management Message" (EMM) may be used to deliver entitlements (sometimes referred to as "privileges") to digital receiver 112. Examples of certain entitlements may include, but are not limited to access rights or descrambling keys. A descrambling key is generally a code that is required by descrambler (decryption) logic (e.g., a cryptographic block) to recover data in the clear from a scrambled format based on the entitlements granted.

As shown, when implemented as a set-top box, digital device 110 may be coupled to other components in content delivery system 100 via a transmission medium 120. The transmission medium 120 operates to transmit program data between digital device 110 and other components in content delivery system 100. The transmission medium 120 may include, but is not limited to electrical wires, optical fiber, cable, a wireless link established by wireless signaling circuitry, or the like.

In one embodiment, content delivery system 100 includes an audio system 130 coupled to transmission medium 120. A digital VCR 140, such as a D-VHS VCR, may also be coupled to the digital device 110 and other components of content delivery system 100 through transmission medium 120. A hard disk recording unit 150 may also be coupled to digital device 110 and other components via transmission medium 120. Display 160 may include a high definition television display, a monitor, or another device capable of processing digital video signals. Finally, a control unit 170 may be coupled to the transmission medium 120. Control unit 170 may be used to coordinate and control the operation of some or each of the components on content delivery system 100.

The digital content of the program data may be transmitted in scrambled form. In one embodiment, as part of the program data, access requirements may be transmitted along with the scrambled content to digital device 110 (e.g., set-top box) that is implemented with receiver 112 thereby functioning as a conditional access unit. An "access requirement" is a restrictive parameter used to determine if digital device 110 implemented with conditional access functionality.

The access requirements may be delivered to the conditional access unit, located within digital device 110 or coupled thereto over transmission medium 120, using packet identifiers (PIDs). Each PID may contain the access requirements associated with a given service. The content that is delivered to the conditional access unit may also include a large number of PIDs, thus enabling special revenue features, technical features, or other special features to be performed locally.

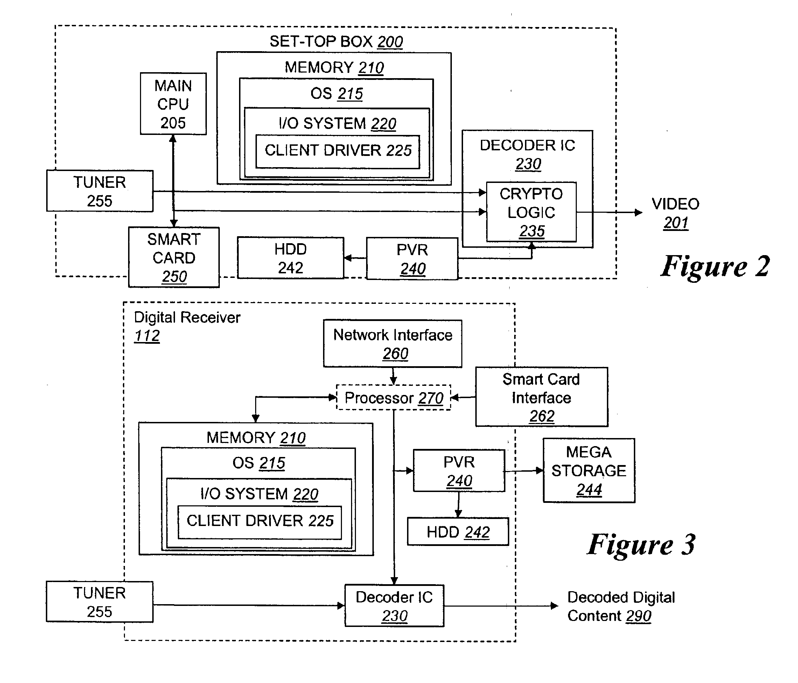

**FIG. 2** is a block diagram illustrating a secure content delivery system that includes a set-top box 200 adapted to operate with a client driver 225 to provide transparent collection of broadcast object carousel data, in accordance with one embodiment. Representatively, **FIG. 2** is a block diagram of a STB access device 200 that obtains broadcast object carousel data according to one embodiment. As shown in **FIG. 2****,** STB 200 may include a service provider personal video recorder (PVR) 240 and hard disk drives (HDD) 242 for storing content selected by a user. As shown in **FIG. 2****,** set-top box 200 may include a main CPU 205 which in conjunction with smart card 250 and tuner 255 may direct a decoder integrated circuit 230 and cryptographic logic 235 to decode received digital content to provide video 201. As further shown in **FIG. 2****,** a personal video recorder or PVR 240 may store encrypted content within hard disk 244.

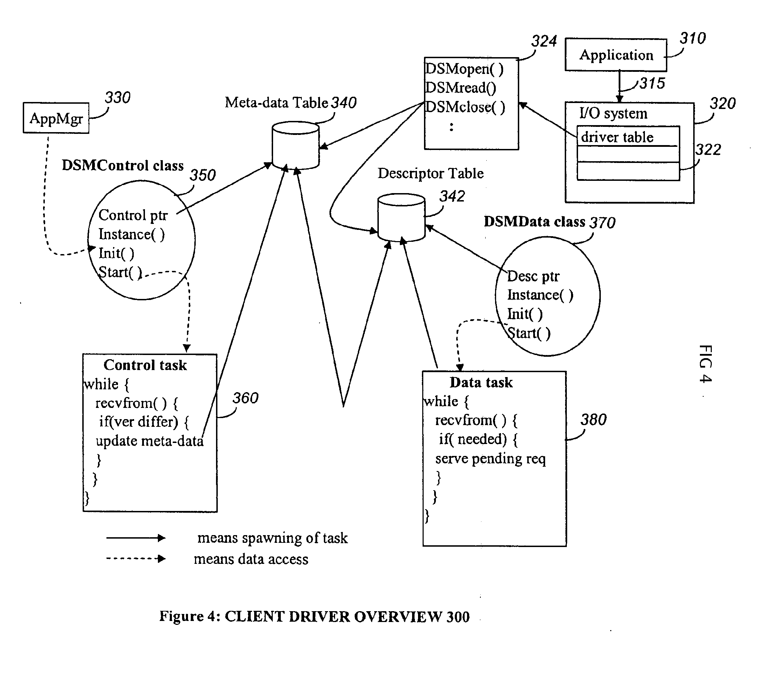

In one embodiment, the features of set-top box 200 may be incorporated within digital receiver 112 as shown in **FIGS. 1** and **3****.** Representatively, a digital receiver includes a network interface 260 as well as processor 270 and smart card interface 262, which direct decoder 230 to provide decoded digital content 290 from tuner 255. In the embodiment described, the client driver 225 is provided as part of an I/O system layer 220 of operating system 215 which is loaded within memory 210 according to one embodiment. Operation of the client driver is further illustrated with reference to **FIG. 4****.**

As illustrated in **FIG. 3****,** digital receiver 112 may include personal video recorder capabilities such as provided by mega storage 244 which may include one or more storage mediums such as one or more Blu-ray discs by Sony Electronics^{®}, Inc. of Parkridge, NJ. In one embodiment, PVR 240 enables digital TV 112 to directly record to digital video disc, Blu-ray disc or other like storage device for directly recording programs for set-top boxes or STBs that do not include a PVR such as PVR 240.

Referring again to **FIGS. 2** and **3****,** in the embodiments described, operation of the process is independent of the nature of the access device so long as the receiver device such as digital TV 112 includes an I/O system layer for load client driver 225. In one embodiment, the access device's database for program data and user interface (UI) can be totally replaced by the CE manufacturer by direct access to the broadcast object carousel using the client driver 225. In such a scenario, the EPG data from the database of a CE manufacturer is used to generate a TV UI. EPG data collected by client driver 225 allows the CE manufacturer's TV or other receiver device to provide a customized or value-added EPG. The TV could further act as a gateway device to transform and stream content in IP format - allowing the TV or other interconnected devices to position itself as a home media server - aggregating content, from disparate sources, and presenting a uniform user friendly interface to play and manage content.

As indicated above, digital storage media command and control (DSM-CC) includes a modular set of protocols that may be combined or used individually to provide a wide range of functionality which is used to support emerging multimedia technologies. The functionality of the DSM-CC protocol can be classified into the following categories: (a) broadcast object carousel without interaction; (b) user-network client configuration and session protocol; (c) user-user directory, stream control, file access; (d) interactive and broadcast download; (e) switch digital broadcast channel change protocol for video-on-demand applications.

In one embodiment, a design of a DSM-CC client support is provided for a broadcast object carousel in a set-top box or digital television based on a DSM-CC-like protocol. In one embodiment, the DSM-CC-like (DSM-CC-SIM) protocol is provided by removing some of the indirect mappings of DSM-CC. However, the embodiments described can be extended to an exact DSM-CC protocol with modifications in the packet format. A functional description of the DSM-CC protocol is provided below.

**FIG. 4** is a block diagram illustrating a client driver 300 to provide transparent collection of broadcast object carousel data according to one embodiment. In the embodiment described a client 400 is implemented as a driver within an I/O system layer 320. According to such a hierarchy, a client driver 300 is similar to a DOS file system layer. In one embodiment, the client driver 300 may be registered as "/net" in the operating system. Hence the path name of any file is "/net/SD_name/SD_rootDir/......".
The application 310 need not have to call client specific functions. It can simply use generic functions like open, read, close, seek, etc. of the OS since the client is implemented as an I/O systems driver.

In one embodiment, the I/O system layer 320 provides abstraction for the client APIs according to commands received over standard OS interface 315. The client driver consist of three portions: a control task 360 that takes care of a control path for collecting IORs (interoperable object references) and replicating a metadata tree similar to the one in the server; a data task 380 that takes care of data path and collects specific file contents on demand for application 310; and a housekeeping task (not shown) that is responsible for housekeeping work when a timer fires, etc. In one embodiment, the control task 360 runs continuously and updates the metadata tree, but the data task 380 may run only if there is a demand from application 310.

In the overview of the client driver 300 shown in **FIG. 4****,** DSMControl 350 is a singleton class of AppMgr 330 that represents the control task 360. The control task's responsibility is maintaining an exact metadata tree in the STB in real time. It listens in the multicast address of the control path, where all the IORs are multicast. If the version of a particular IOR is different from the one in the STB, it is updated in the metadata table 340, else dropped. Metadata table 340 may be represented by the instance of singleton class DSMControlTable class. In one embodiment, metadata table 340 is guarded by meta-data semaphore as many tasks (control, housekeeping, API function call) are accessing the metadata table 340.

DSMData 370 is a singleton class that represents the data task 380. The data task's 380 responsibility is serving the pending request in the descriptor table 342 or cache file content that may be accessed in the future in non-volatile memory such as Flash, a disk, or the like. It listens in the multicast address of the data path, where all the file contents are multicast. On receiving the file content datagram, data task 380 refers to the descriptor table 342 to check if there is any pending request (like a read request). The descriptor table 342 is an array of objects each represented by the DSMDescriptor class. A maximum size of the array may indicate the maximum number of DSM files that can be opened simultaneously, depending on the OS. The descriptor table 342 is guarded by a descriptor table semaphore as many tasks (data task, housekeeping and API function call) are accessing the descriptor table. Moreover, each entry in the descriptor table 342 may have a semaphore associated with it, i.e., each instance of DSMDescriptor class may have a semaphore in it.

In one embodiment, if any descriptor in the descriptor table 342 waits for a requested object, the data task 380 services the request. In one embodiment, data task 380 services the request by filling the buffer with the requested broadcast object carousel data content. However, an API call remains blocked in the semaphore for that descriptor until its request is serviced by data task 380. If the request is fully serviced for a descriptor in the descriptor table 342, the data task 380 releases the semaphore associated with that descriptor so that the API call waiting for the service (by getting blocked in the semaphore for that descriptor) continues. All API access from the applications is through a standard file system interface of the OS.

After servicing each of the descriptors in table 342, if no descriptor needs service or continues to cache the file chunks, the data task 380 may close the socket and is blocked until a next request is detected. If there is at least one descriptor that needs service, the data task 380 receives the next UDP datagram from the network. Any copy request through the API DSMCCCopy(char *pCarouselFile, char *pLocalFile, BOOL bOverWrite) is equivalent to pending descriptors until it is completely served (all the files are recursively copied to a local path).

It is noted that in the United States, there are a limited number of service providers available, each of which uses a more or less conventional style of electronic program guide. However, by using a client driver to provide transparent guide data collection, a value added EPG is possible to replace conventional EPGs. Rather than accessing an EPG from a service provider such as the DIRECTV^{®} system of DIRECTV^{®} of El Segundo, CA, an STB/DTV vendor can provide a value added EPG using transparently collected broadcast carousal program guide data.

According to the embodiments, the service provider's electronic program guide or EPG is replaced. In addition, transfer of set top box recorded content to discs for archival purposes may be provided in order to overcome the persistent problem of the lack of storage within the hard disk drives of a personal video recorder.

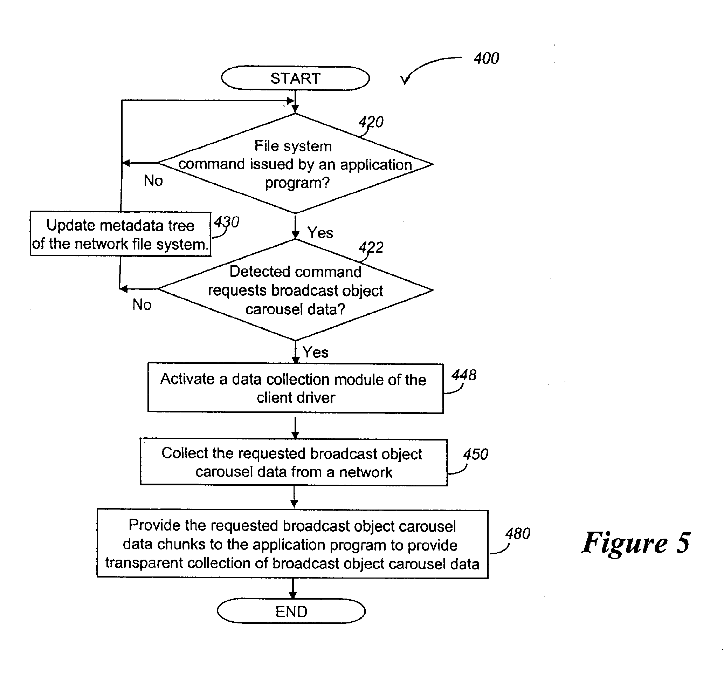

Turning now to **FIG. 5****,** the particular methods associated with various embodiments are described in terms of computer software and hardware with reference to a flowchart. The methods to be performed by a computing device (e.g., a digital TV device/set-top box) may constitute state machines or computer programs made up of computer-executable instructions. The computer-executable instructions may be written in a computer program and programming language or embodied in firmware logic. If written in a programming language conforming to a recognized standard, such instructions can be executed in a variety of hardware platforms and for interface to a variety of operating systems.

In addition, embodiments are not described with reference to any particular programming language. It will be appreciated that a variety of programming languages may be used to implement embodiments as described herein. Furthermore, it is common in the art to speak of software, in one form or another (e.g., program, procedure, process, application, etc.), as taking an action or causing a result. Such expressions are merely a shorthand way of saying that execution of the software by a computing device causes the device to perform an action or produce a result.

**FIG. 5** is a flowchart illustrating a method 400 for transparent data collection from a network for an electronic program guide application according to one embodiment. **FIG. 5** depicts a process 400 that can be used to obtain metadata regarding a broadcast object carousel to enable transparent collection of program guide data from the broadcast object carousel. A use for this embodiment involves acquiring metadata regarding broadcast object carousel data from a service provider. This is accomplished without need for a proprietary EPG application. Metadata has all the file attributes in that broadcast object carousel data. In one embodiment, the method for transparent data collection from a network is described with reference to the client driver overview 300 as shown in **FIG. 4****.**

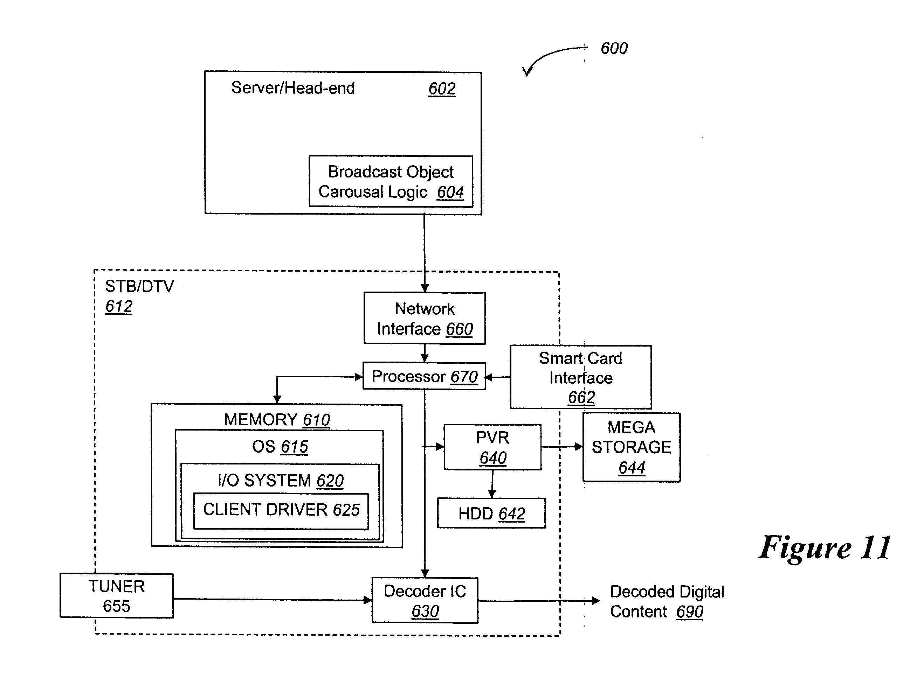

Referring again to **FIG. 5****,** at a process 420 it is determined whether a filesystem command is issued by an application program. For example, as shown if **FIG. 4****,** the application program may be an application 310 such as, for example, an electronic program guide (EPG) application. However, the EPG application 310 may be provided by a vendor that is different from a service provider of broadcast object carousel for providing digital content from a server, such as head-end/server 600 shown in **FIG. 11****.** As shown in **FIG. 4****,** transparent data collection may be provided by a client driver that is installed within an I/O system layer 320. Representatively, a client driver is provided in a driver table 322.

As shown in **FIG. 4****,** a file system command issued by application 310 may be translated into a digital storage media (DSM) command, such a DSMopen(), DSMread(), DSMclose(), DSMseek(), or the like, as identified by reference numeral 324. As shown in **FIG. 4****,** referencing the client driver 300 within the driver table 322 enables the client driver to respond to standard file system interface commands issued by application 310. Whether application 310 is loaded within a set-top box or digital television system, from the perspective of application 310, broadcast object carousel data is accessed as if it were loaded (local) within the corresponding set-top box or digital television system.

Referring again to **FIG. 5****,** when a file system command is issued by an application program, at process block 422, it is determined whether the command requests broadcast object carousel data. Control task 360 keeps updating the metadata continuously so that the application can use standard OS commands to get file attributes at any time. However, if a request for broadcast object carousel data is detected, a data collection module of the client driver is activated by process block 448.

For example, as shown in **FIG. 4****,** DSM data class 370 may activate data task 380, which may be referred to herein as a data collection module. Referring again to **FIG. 5****,** at process block 450, the requested broadcast object carousel data is collected from a network. Once collected, at process block 480, the requested broadcast object carousel data chunks are provided to the application program. As described herein, the transparent collection of guide file data may refer to activation of a data collection module (data task) of a client driver within an I/O system layer for collecting guide file data so that such data is provided to an EPG application in a manner where, from the perspective of the EPG application, the broadcast object carousel guide file data is stored locally.

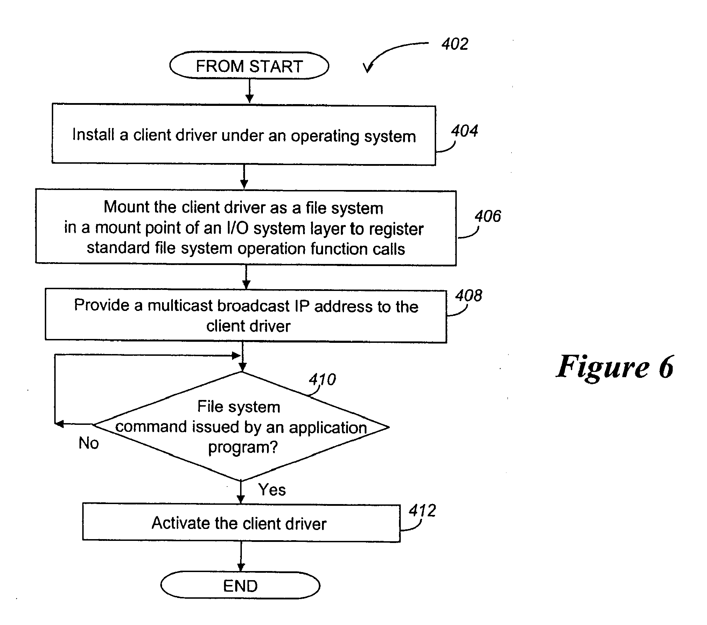

**FIG. 6** is a flow chart illustrating a method 402 that is performed to install a client driver to provide a transparent broadcast object carousel data collection. At process block 404, a client driver is installed under an operating system. At process block 406, the client driver is mounted at a file system in a mount point of an I/O system layer to register standard file system operation function calls. For example, as shown in **FIG. 4****,** the client driver is installed within driver table 322 to enable translation of standard file system operation function calls issued by application 310 into DSM calls indicated by reference numeral 324 in **FIG. 4****.**

Referring again to **FIG. 6****,** at process block 408 a multicast broadcast IP address is provided to the client driver. For example, as shown in **FIG. 4****,** this broadcast IP address is provided to the DSM control class 350 to enable instantiation of control task 360. In addition, this IP address may be provided to the DSM data class 370 to instantiate data task 380 to provide broadcast object carousel data collection. Referring again to **FIG. 6****,** at process block 410 it is determined whether a file system command is issued by an application program. Once a file system command is issued, the client driver is activated at process block 412.

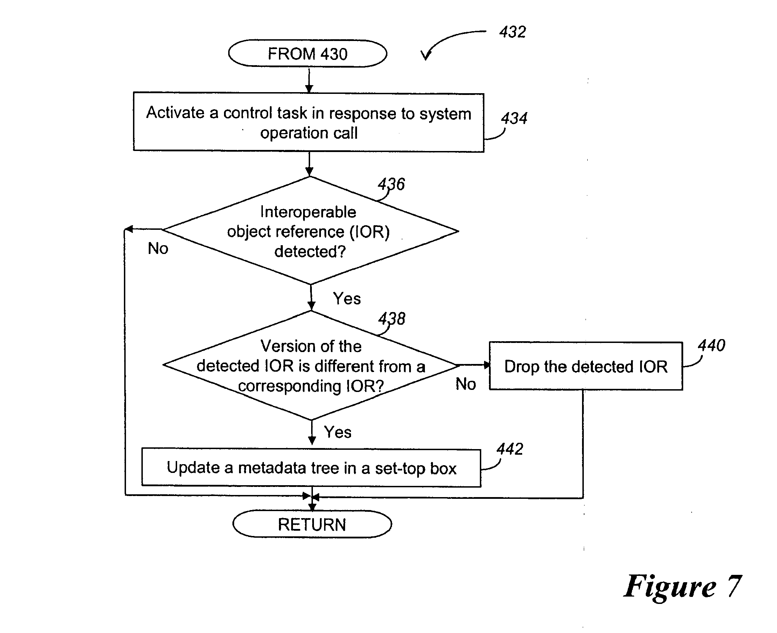

**FIG. 7** is a flow chart illustrating a method 432 for updating a metadata tree of process block 430 of **FIG. 5****,** according to one embodiment. At process block 434, a control task is activated in response to a system operation call. At process block 436, it is determined whether an interoperable object reference (IOR) is detected. In the embodiments described, the client driver collects a root IOR for a service domain from a location present in a service gateway message.

Referring again to **FIG. 7****,** when an IOR is detected, at process block 438 it is determined whether the version of the detected IOR is different from a corresponding IOR. When the versions are the same, the IOR is dropped at process block 440. Otherwise, at process block 442 a metadata tree in a set-top box is updated according to the IOR. In one embodiment, every service domain has a well-known address (multicast IP and port number of a service gateway) in which a client looks for a service gateway message (DSM_CC_SIM). A well-known address for each service domain is present in a file (such as a parameters configuration file).

In one embodiment, a service gateway message contains an IOR for a service domain, with one BIOP for the root directory in that service domain. A BIOP (Broadcast Inter-ORB Protocol) of a root directory may indicate the location for identifying an IOR for the root directory. As a result, the client collects the root IOR for a service domain from a location present in a service gateway message. The root IOR in turn contains a BIOP message (metadata) for all objects (files and directories) in the root directory. In one embodiment, a client collects DSM_CC_SIM messages for the objects in the root directory. Any directory object in the root will in turn have IORs describing the object which contain a BIOP message for the objects (directories or files) it contains.

In one embodiment, a client recursively collects the IORs to acquire all metadata information for a metadata tree structure beginning with a root. In one embodiment, a server will send IOR messages and directory messages in one multicast address and file content messages in a different multicast address. Accordingly, in one embodiment, one control path multicast address is provided for IORs, and a data path multicast address is provided for file content.

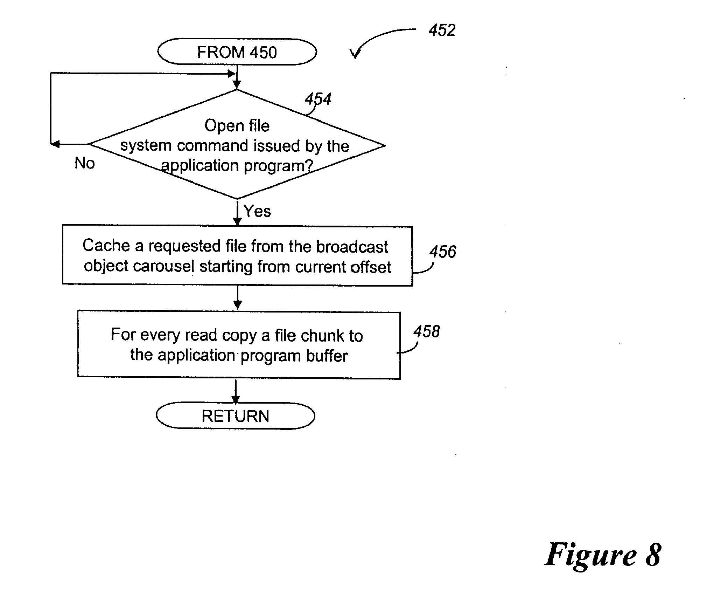

**FIG. 8** is a flow chart illustrating a method 452 for collecting requested broadcast object carousel data of process block 450 of **FIG. 5****,** according to one embodiment. Representatively, at process block 454 it is determined whether a file system command is issued by the application program. Once a file system command is issued, at process block 456 a requested file from the broadcast object carousel is cached starting from current offset. At process block 458, for each read a file chunk is coupled to the application program buffer.

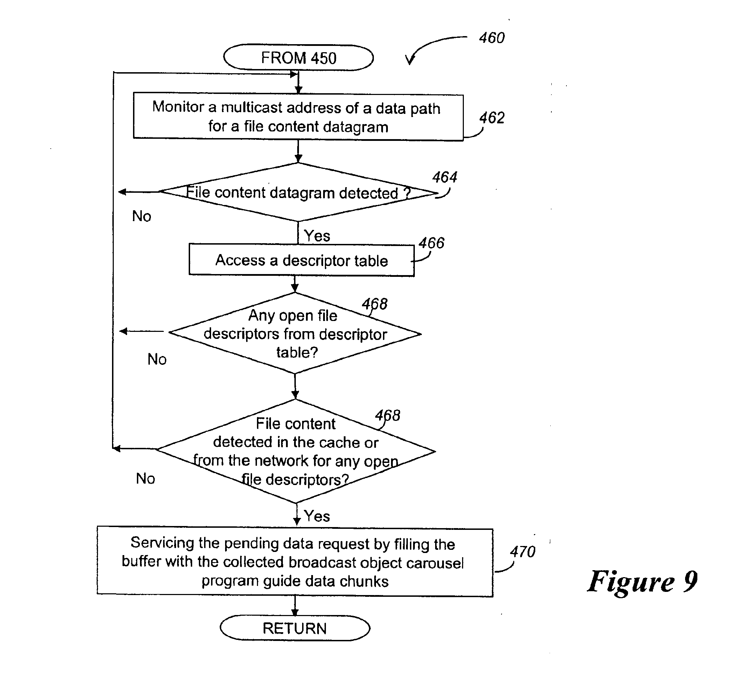

**FIG. 9** is a flow chart illustrating a method for collecting broadcast object carousel data of process block 450 of **FIG. 5****,** according to a further embodiment. At process block 462, a multicast address of a data path may be monitored for a file content datagram. If a file content datagram is detected at process block 464, at process block 466 a descriptor table may be accessed. Once accessed, at process block 468 it is determined whether file content is detected in the cache or from the network for any of the open file descriptors. For example, as illustrated with reference to **FIG. 4****,** data task 380 may access descriptor table 342 to determine whether a pending request is detected. When a pending request is detected, at process block 470, the pending request may be serviced by filling the buffer with collected broadcast object carousel program guide data chunks.

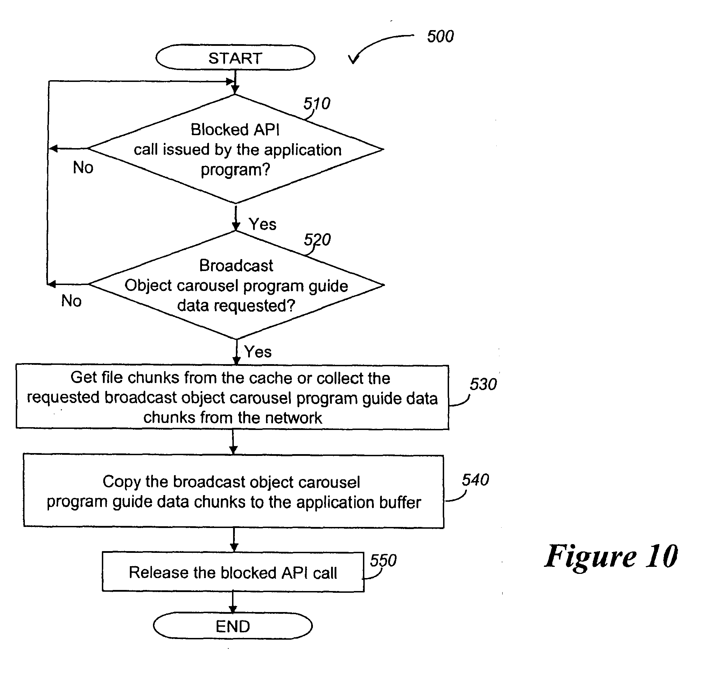

**FIG. 10** is a flow chart illustrating a method for transparently acquiring broadcast object carousel program guide data. At process block 510 it is determined whether a blocked API call is issued by an application program. Once detected, it is determined whether broadcast object carousel program guide data is requested. Once guide data is requested at process block 520, at process block 530 the requested broadcast object carousel program guide data file chunks retrieved from the cache may be collected from a network. Once collected, at process block 540, the requested broadcast object carousel program guide data chunks are copied to the application buffer. At process block 550, the blocked API call may be released once the request for data is serviced.

**FIG. 11** is a block diagram illustrating a content delivery system 600 including a server/head-end 602. Representatively, server 602 includes broadcast object carousel logic 604 for broadcasting an object carousel including program guide data. The broadcast object carousel is received by a set-top box/digital TV system (STB/DTV) 612. STB/DTV 612 includes similar reference numerals to set-top box 200 and digital receiver 112 shown in **FIGS. 2** and **3****.** In one embodiment, as shown in **FIG. 11****,** a home network may be coupled to STB/DTV 612 as well as mega storage 644 which provides or supplements content recording capabilities provided by HDD 642.

The following provides a functional description of the DSM-CC-SIM protocol.

### Protocol and Message Description

DSM-CC download protocol helps the client in providing transparent file system interface to the objects (files or directories or anything) that reside in server or head-end. Application is unaware of the location of the objects and STB don't need to acquire the objects in advance. Meta data of the objects and the content of the object are multicast continuously. A structured group of objects are called Service Domain (SD). Each SD has a Service Gateway (SG).

### Message Description

Generic DSM_CC_SIM message is shown in Table 1. DSM_CC_SIM message has standard header and payload. Payload consists of either raw byte in case of file object or IOR in case of directory object. IOR in turn contains many BIOP messages in it.

### DSM_CC_SIM Message

**Table 1: DSM_CC_SIM message syntax**

| Syntax | Bits | Format |
|---|---|---|
| DSM_CC_SIM_Message() | | |
| { | | |
| protocol_version | 16 | Uimsbf |
| Reserved | 16 | Uimsbf |
| object_id | 32 | Uimsbf |
| object_type | 32 | Uimsbf |
| section_index | 32 | Uimsbf |
| section_count | 32 | Uimsbf |
| section_offset | 32 | Uimsbf |
| object_version | 32 | Uimbsf |
| payload_length | 32 | Uimsbf |
| for (i=0; i<payload_length; i++) { | | |
| Payload() | 8 | Bslbf |
| } | | |
| } | | |

***protocol_version:*** A 16 bit field whose function, in future, is to is to allow the DSM_CC_SIM_Object_Descriptor structure to carry parameters that may be structured differently from those defined in the current protocol. This version shall be 0x01
***object_id:*** A unique 32-bit number identifying this object (can be file or directory). This value must be unique for each object within SD.
***object_type: :*** A unique 32-bit number identifying this object's type. Current values are shown in Table 2.

**Table 2: DSM_CC_SIM message format**

| ***Value (Hex)*** | ***Value (Decimal)*** | ***Object Type*** |
|---|---|---|
| 0x0001 | 1 | Service Gateway |
| 0x0002 | 2 | Directory |
| 0x0003 | 3 | File |

***section_index:*** If the object spans over multiple packet, it is sent as number of sections. This field provides an N of M index to reassemble object that spans multiple transport packets. This field value must be between 1 to section_count for that object.
***section_count:*** Section count specifies the total number of sections the given object is split into because of transport layer's requirement This field value shall be >=1.
***section_offset:*** Section offset specifies the offset of the given payload in the entire object. ***object_version:*** If the object type is service gateway or directory, this refers to version of the IOR contained in the message. Client decides to process this IOR message or not based on version number. If the object type is file, then it is the timestamp of that file. Client uses this timestamp while the read request from application is pending.
***payload_length:*** This 32-bit field indicates the number of message bytes following.
***payload:*** There are two types of payload depending on the object type. They are Interoperable Object Reference (IOR) and File Content. If the object type is Service Gateway or Directory, payload is IOR (described in Table 3 below). Specifically if the payload IOR refers to service domain, which contains only one BIOP that describes the top-level directory i.e root directory for that service domain then the object type is called Service Gateway. If payload IOR refers to any directory (with one or more BIOP) in that service domain including that of root, then the object type is called directory. If the object type is File, payload consists of raw byte from that file whose offset is given by section_offset. Content of the directory or service gateway object are IORs whereas content of the file object are file itself.

### IOR

**Table 3: IOR Syntax**

| Syntax | Bits | Format |
|---|---|---|
| DSM_CC_IOR() | | |
| { | | |
| Length | 32 | Uimsbf |
| biop_count | 32 | Uimsbf |
| obj_name_length | 32 | Uimsbf |
| for(n=0; n<obj_name_length; n++) { | | |
| obj_name_byte | | |
| } | 8 | Uimsbf |
| for(n=0; n<obj_name_length%4; n++) { | | |
| PAD_BYTE | | |
| } | 8 | Uimsbf |
| for(n=0; n<biop_count; n++) { | | |
| biop() | | |
| } | | DSM_CC_BIOP |
| } | | |

***length:*** Total length of the descriptor including this length field.
***biop_count:*** Total number of BIOPs (described in Table 4) present in this IOR. While IOR represents a particular directory object, BIOP describes the meta-data of the directory/file object present in that directory object. Hence biop_count is equal to the total number of directories + files in that directory object.
***obj_name_length:*** Total length of the Object name.
***obj_name_byte:*** Null terminated string holding the Object's full path name from root.
***biop:*** It describes the meta-data about the object. Broadcast Inter ORB Protocol (BIOP) message is described in Table 4

### BIOP Message

**Table 4: BIOP syntax**

| Syntax | Bits | Format |
|---|---|---|
| DSM_CC_BIOP () | | |
| { | | |
| Length | 32 | uimsbf |
| object_type | 32 | uimsbf |
| object_id | 32 | uimsbf |
| object_location | 32 | uimsbf |
| object_timestamp | 32 | uimsbf |
| object_applStamp | 32 | uimsbf |
| object_size | 32 | uimsbf |
| object_download_time | 32 | uimsbf |
| object_name_length | 32 | uimsbf |
| for(n=0; n< object_name_length; n++) { | | |
| object_name_byte | | |
| } | 8 | uimsbf |
| for(n=0; n<object_name_length%4; n++) { | | |
| PAD_BYTE | | |
| } | 8 | uimsbf |
| } | | |

***length:*** Total length of the BIOP including this length field.
***object_type:*** Type can be either directory or file. Refer to table 2.
***object_id:*** Id of the object to which this meta-data refers to.
***object_location:*** Indicates the address in which the content of this object is multicast. If the type field is directory, then this object is a directory object and the location refers to the address in which the IOR for this object (directory) is multicast as the content of the directory object is IOR. If the type is file, then location refers to the address in which the content of the file is multicast.
***object_timestamp:*** DSM-CC level timestamp of the object.
***object_applstamp:*** Application level timestamp of the object specified and controlled by application.
***object_size:*** Size in bytes of the object.
***object_download_time:*** Estimated download time of object in UTC format. This is estimated based on object size, carousel configuration and assumes an error free transport. A value of 0xFFFFFFFF is used to indicate no estimate is given for this object.
***object_name_length:*** Total length of the Object name.
***object_name_byte:*** Null terminated string holding only the object name (NOT with full path). It can be name of the directory or filename depending on the object type field.

The following provides a class description of the DSM-CC-SIM protocol.

### DSMControl

DSMControl is the top-level class that App Manager can access for initializing and starting the driver. It also implements control and housekeeping tasks and instantiates DSMData object. It instantiates meta-data object (DSMControlTable) that maintains the meta-data of the network file system.

### DSMData

DSMData class implements data task. It instantiates descriptor table whose index has pointer to descriptor object (DSMDescriptor) that maintains the state of all the opened descriptors.

### DSMMetaData

DSMControlTable implements meta-data table for network file system

### DSMDescriptor

DSMDescriptor implements the descriptor data structure. It contains an instance of DSMRequest object that describes the pending request.

### DSMSectionHeader

DSMSectionHeader implements the processing of DSM Header in the message

### DSMSectionIOR : public DSMSectionHeader

DSMSectionIOR implements the processing of IOR portion of the DSM message

### DSMSectionFC : public DSMSectionHeader

DSMSectionFC implements the processing of File Content portion of the DSM message

### DSMRequest

DSMRequest implements data structure for the pending request.

The following provides an interface description of the DSM-CC-SIM protocol.

### int DSMopen(DSMDev *pt, char *path, int flags, int mode)

DSMopen( ) is called by the I/O system, when the application calls open("/net/.....", mode). I/O system passes pointer to device descriptor (dsm_desc_id) and remaining path name of the file after removing the mount name ("/net"), flags and mode of open to DSMopen call. This API checks the descriptor table/array to find an empty slot. If a slot is available, it reserves it by creating a descriptor object of DSMDescriptor class and assigns the pointer to this object in the array. It then passes the corresponding index in the descriptor table/array as return value to I/O systems. I/O systems maintains this dsm file pointer in its internal table and subsequent I/O system call passes this index after DSMopen for that instance of file.

### STATUS DSMclose(int fd)

DSMclose() is called by the I/O system, when the application calls close(file_descriptor). I/O system gets the corresponding dsm file descriptor for the given file_descriptor from its internal table and calls DSMclose(dsm_file_descriptor). DSMclose locates its object using the dsm_file_descriptor, which is nothing but the index in descriptor array and releases its slot.

### STATUS DSMioctl(int fd, int function_code, int arg)

DSMioctl( ) is called by the I/O system, when the application call ioctl(file_descriptor, function, arg). I/O system gets the corresponding dsm file descriptor for the given file_descriptor from its internal table and calls DSMioctl(dsm_file_descriptor, function, arg). Function code describes the type of operation to be performed on the file given by dsm file descriptor. Function codes supported are: MetaDataGet = 100 and DSMseek = 7.

### STATUS DSMMetaDataGet(DSMMetaData &data)

It returns the attribute/meta-data of the file specified within the passed data object.

### STATUS DSMCCCopy(char *pCarouselFile, char *pLocalFile, BOOL bOverWrite);

It copies the all the files in the carousel path name (pCarouselFile) recursively to the destination path name (pLocalFile). if bOverWrite is TRUE, all files are force copied (overwritten) to destination path and if it is FALSE only missing files are copied to destination path

Several aspects of one implementation of the transparent data collection from a network for an electronic program guide application are described. However, various implementations of the transparent broadcast object carousel data provide numerous features including, complementing, supplementing, and/or replacing the features described above. Features can be implemented as part of the DTV or as part of a home entertainment network in different embodiment implementations. In addition, the foregoing description, for purposes of explanation, used specific nomenclature to provide a thorough understanding of the embodiments of the invention. However, it will be apparent to one skilled in the art that the specific details are not required to practice the embodiments of the invention.

It is to be understood that even though numerous characteristics and advantages of various embodiments have been set forth in the foregoing description, together with details of the structure and function of various embodiments of the invention, this disclosure is illustrative only. In some cases, certain subassemblies are only described in detail with one such embodiment. Nevertheless, it is recognized and intended that such subassemblies may be used in other embodiments. Changes may be made in detail, especially matters of structure and management of parts within the principles of the embodiments to the full extent indicated by the broad general meaning of the terms in which the appended claims are expressed.

Having disclosed various embodiments and the best mode, modifications and variations may be made to the disclosed embodiments while remaining within the scope of the embodiments of the described as defined by the following claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A method comprising:
detecting a file system command issued by an application program;
if the detected command requests broadcast object carousel data, collecting the requested broadcast object carousel data from a network; and
providing the requested broadcast object carousel data to the application program to provide transparent collection of broadcast object carousel data and also of cache file content chunks for future access by the application program.

2. The method of claim 1, wherein the application program is an electronic program guide (EPG) application that requests broadcast object carousel program guide data.

3. The method of claim 1, further comprising:
detecting a blocked application program interface (API) call issued by the application program to request broadcast object carousel program guide data;
collecting the requested broadcast object carousel program guide data;
loading the requested broadcast object carousel program guide data within a buffer corresponding to the application to service the request made by the blocked API call; and
releasing the blocked API call.

4. The method of claim 1, wherein all file system commands are one of an open command, a read command, a close command, a seek command, an LS command, and a DIR command.

5. The method of claim 1, wherein collecting further comprises:
detecting an open file system command issued by the application program;
caching a requested file from the broadcast object carousel data starting from a current offset; and
storing, for every read, a file chunk within a buffer corresponding to the application program.

6. The method of claim 1, wherein the file system command is detected by a guide data collection module that is installed under an operating system within an input/output (I/O) file system layer to register standard file system operation function calls.

7. The method of claim 1, wherein prior to detecting the file system command, the method further comprises:
installing a guide data collection module under an operating system;
mounting the guide data collection module as a file system in a mount point to register standard file system operation function calls; and
providing a multicast broadcast IP address to the guide data collection module, wherein the guide data collection module is activated if the application issues a system call for broadcast object carousel program guide data.

8. The method of claim 1, wherein the process is carried out in a television set top box.

9. The method of claim 1, wherein the process is carried out in a digital television device.

10. A computer readable storage medium storing instructions which, when executed on a programmed processor, carry out a process according to claim 1.

11. A method comprising:
installing a client driver under an operating system within an input/output (I/O) system layer by mounting the client driver in a mount point to register standard file system operation function calls; and
if a standard file system operation call is detected activating the client driver, and
if a standard file system operation call for broadcast object carousel program guide data is detected, activating or auto-activating on installation a guide data collection module of the client driver to collect broadcast object carousel program guide data to provide a transparent collection of broadcast object carousel program guide data for an electronic program guide (EPG) application.

12. The method of claim 1, wherein activating further comprises:
activating a control task in response to system operation call;
detecting an interoperable object reference (IOR);
updating a metadata tree in a set-top box if a version of the detected IOR is different from a corresponding IOR in the set-top box; and
dropping the detected IOR if the IOR matches a corresponding IOR in the set-top box.

13. The method of claim 11, wherein activating comprises:
monitoring a multicast address of a data path for a file content datagram;
accessing a descriptor table to determine if there is a pending request corresponding to a detected file content datagram; and
servicing the pending data request by filling a buffer with the collected broadcast object carousel program guide data.

14. The method of claim 13, further comprising:
releasing a semaphore associated with a descriptor once servicing of the pending request is completed; and
releasing the API call waiting for the service.

15. The method of claim 1, wherein the process is carried out by instructions stored on a computer readable storage medium and executed on a programmed processor

16. A system comprising:
a network to transmit broadcast object carousel data to a plurality of clients; and
at least one client driver that is installed under an operating system within an input/output (I/O) system layer to register standard file system operation function calls, the client driver including a guide data collection module to provide generic guide file collection that is transparent to an electronic program guide collection module.

17. The system of claim 1, wherein the client driver is installed under an operating system within an I/O system layer of a set-top box.

18. The system of claim 16, wherein the client driver is installed under the operating system within the I/O system layer of a digital broadcast television.

19. The system of claim 16, wherein the client driver further comprises:
a control task module to update a metadata tree with broadcast object carousel control data.

20. The system of claim 16, wherein the client driver further comprises:
a descriptor table, the guide data collection module to access the descriptor table to determine if an EPG display module is requesting broadcast object carousel program guide data.
